# EUROPÄISCHE PATENTSCHRIFT

(11) **EP 0 914 238 B1**
(45) Veröffentlichungstag und Bekanntmachung des Hinweises auf die Patenterteilung: **07.03.2001**
(21) Anmeldenummer: 97920484.9
(22) Anmeldetag: 22.05.1997
(51) Int. Cl.: B29C 45/16, B29C 45/14, B29C 70/78

(54) **VERFAHREN UND VORRICHTUNG ZUR HERSTELLUNG VON BEWEGLICHEN ELEMENTEN EINES KUNSTSTOFFBAUTEILS**
PROCESS AND DEVICE FOR MAKING MOVABLE UNITS OF A PLASTIC COMPONENT
PROCEDE ET DISPOSITIF POUR PRODUIRE DES ELEMENTS MOBILES D'UNE PIECE EN PLASTIQUE

(30) Priorität: 27.06.1996 CH 161096
(43) Veröffentlichungstag der Anmeldung: 12.05.1999
(73) Patentinhaber: Kaufmann, Georg, 5442 Fislisbach (CH)
(72) Erfinder: Kaufmann, Georg, 5442 Fislisbach (CH)
(74) Vertreter: EGLI-EUROPEAN PATENT ATTORNEYS
(86) Internationale Anmeldenummer: CH9700202
(87) Internationale Veröffentlichungsnummer: WO9800279

(56) Entgegenhaltungen:
- EP-A- 0 684 120
- WO-A-96/25282
- GB-A- 2 271 956
- US-A- 5 335 939
- US-A- 5 395 668

## Beschreibung

Die Erfindung betrifft gemäss einem ersten Aspekt ein Verfahren zur Herstellung von beweglichen Elementen eines beispielsweise durch ein Hinterpressverfahren bzw. ein kombiniertes Hinterpress-Spritzgussverfahren hergestellten und insbesondere eine Decorschicht aufweisenden Kunststoffbauteils, wobei die Werkzeugform der Ausbildung von vorbestimmten Randbereichen dient, welche mindestens einen Teil des Umrisses von beweglichen Elementen definieren, so dass diese beweglichen Elemente mit dem Kunststoffbauteil einstückig hergestellt werden können, sowie mit diesem Verfahren herstellbare, bewegliche Elemente.

Gemäss einem zweiten Aspekt betrifft die Erfindung ein Werkzeug zur Herstellung von beweglichen Elementen eines Beispielsweise durch ein Hinterpressverfahren bzw. ein kombiniertes Hinterpress-Spritzgussverfahren hergestellten und insbesondere eine Decorschicht aufweisenden, Kunststoffbauteils und zum Trennen der Ränder dieses beweglichen Elementes vom Kunststoffbauteil mit mindestens einem Trennelement bzw. einem Sperrschieber, der eine relativ dünnwandige Sperr- bzw. Trennklinge aufweist und der in den vorbestimmten Randbereichen mindestens eines Teils des Umrisses dieser beweglichen Elemente angeordnet ist.

In vielen Gebieten der Technik werden Bauteile aus Kunststoff verwendet, die neben funktionalen Anforderungen auch ästhetische Ansprüche erfüllen müssen. Dazu ist als ein Beispiel von vielen der Automobilbau zu nennen, wo für Innenverkleidungen, Hutablagen, Armaturenbrett u.ä. solche Kunststoffbauteile Verwendung finden. Um sie ästhetisch ansprechend zu gestalten, wird deshalb auf einer Sichtseite des Kunststoffbauteils oftmals als gesonderte Oberflächenschicht eine Decorschicht angebracht. Aus Gründen einer unproblematischen Entsorgung bzw. einer vereinfachten Wiederverwendung sollte das Decormaterial vorzugsweise aus dem gleichen Material wie der tragende Kunststoffbauteil hergestellt sein, solche Monomaterialien lassen sich somit wesentlich kostengünstiger rezyklieren als Mischmaterialien, die zuerst getrennt werden müssen.

Zur Herstellung derartiger Kunststoffbauteile wurde deshalb das sogenannte Hinterpressverfahren entwickelt. Dieses Verfahren ist in der Publikation "Kunststoffe im Automobilbau, VDI-Verlag GmbH, Düsseldorf 1994" beschrieben. Es sieht vor, dass an einem Werkzeugoberteil einer geöffneten Werkzeugform eine Decorschicht so befestigt wird, dass es die Oberfläche des Werkzeugoberteils gegebenenfalls vollflächig bedeckt. Anschliessend wird in die weiterhin geöffnete Werkzeugform eine geschmolzene und daher fliessfähige Kunststoffmasse eingespritzt bzw. eingelegt. Danach wird die Form geschlossen, wodurch sich unter dem Schliessdruck die Kunststoffmasse gleichmässig in der Form verteilt und, zumindest bei Decormaterialien mit Poren, wie beispielsweise bei textilen Materialien, teilweise in das Decormaterial eindringt. Die Kunststoffmasse erstarrt im folgenden und geht dabei mit der Decorschicht eine innige Verbindung ein.

Wenn nun eine Oberfläche eines Kunststoffbauteils nur teilweise mit einer Oberflächenschicht versehen sein soll, kann dieses eben beschriebene Hinterpressverfahren mit einem Spritzgussverfahren kombiniert werden. Dabei kommt für den Abschnitt des Kunststoffbauteils, der mit der Decorschicht bzw. der gesonderten Oberflächenschicht versehen sein soll, das Hinterpressverfahren zur Anwendung. Die Aufbereitung der Kunststoffe für das kombinierte Hinterpress-Spritzgussverfahren kann mit konventionellen Aufbereitungsanlagen vorgenommen werden.

GB 2,271,956 offenbart gattungsgemässe Verfahren bzw. Vorrichtungen und entsprechend hergestellte Kunststoffteile, für deren Produktion ein federndes Oberflächenmaterial vorgeformt und auf eine erste Hälfte einer Gussform gelegt wird. Eine erste Portion eines thermoplastischen Harzes wird auf eine dem eingelegten Oberflächenmaterial gegenüberliegende Region der zweiten Hälfte der Gussform gebracht. Darauf wird die Form geschlossen, so dass sich das Harz auf der Hinterseite des Oberflächenmaterials ausbreitet. Bevor dieses Harz ganz erstarrt ist, wird eine weitere Portion dieses Harzes in die geschlossene Form eingespritzt, so dass sich die beiden Harzportionen miteinander verbinden können. Nach genügendem Auskühlen des Kunststoffes wird das Bauteil ausgestossen.

US 5,335,939 betrifft eine Air-Bag-Vorrichtung, dessen Abdeckung als Verbundbauteil ausgebildet wird: Die aus zwei Komponenten bestehende Oberflächenschicht wird vorgeformt, um ihr die Umrisse der Abdeckung zu geben. Darauf wird diese Oberflächenschicht - zusammen mit einem als Verstärkung dienenden Netz - in eine Form gelegt, in der ein Basismaterial aufgebracht und damit das Netz mit der Oberflächenschicht verbunden wird. Die so hergestellte Abdeckung ist als bewegliches Element ausgestaltet und weist speziell ausgebildete und mit dem Netz verstärkte Scharniere auf, über die das bewegliche Element mit Hilfe von Schrauben oder Bolzen an einem Gehäuse befestigt wird.

Sollen bewegliche Teile wie Klappen oder Schieber in solchen Kunststoffbauteilen vorgesehen werden, kommen normalerweise Scharniere oder Schienen und deren Befestigungsmittel aus Kunststoff oder Metall zum Einsatz. Der Einbau separat hergestellter, beweglicher Teile - insbesondere unter Verwendung artfremder Materialien - verkompliziert und verteuert sowohl die Herstellung als auch die Montage und vor allem die Wiederverwertung solcher Bauteile. Dazu treten bei Verwendung üblicher beweglicher Bauteile in Verkehrsmitteln-beim Betrieb derselben - häufig durch Vibrationen hervorgerufene Klappergeräusche auf.

Hier soll die Erfindung Abhilfe schaffen.

Die Aufgabe wird mit einem Verfahren der eingangs beschriebenen Art erfindungsgemäss dadurch gelöst, dass die Ränder von zu einer Klappe oder zu einem Schieber bestimmten, beweglichen Elementen der Kunststoffbauteile in einer bestimmten Weise vorgeformt und beispielsweise mit einem Teil des zum Hinterpressverfahren bzw. kombinierten Hinterpress-Spritzgussverfahren verwendeten Werkzeuges bereits vor oder erst nach dem Auskühlen der Kunststoffmasse abgetrennt oder ausgestanzt werden. Dadurch, dass die Baustärke des Kunststoffbauteils entlang einer bestimmten Kante einer erfindungsgemässen Klappe eingeengt sein kann, wird ein Filmscharnier für die Klappe gebildet. Erfindungsgemässe Klappen werden deshalb mit diesem Kunststoffbauteil einstückig hergestellt und bleiben über besagte Filmscharniere entlang eines Teils der vorbestimmten Randbereiche mit diesem verbunden. Für das mindestens teilweise Trennen der beweglichen Teile vom Kunststoffbauteil eignet sich besonders eine im Produktionswerkzeug vorgesehene Sperr- bzw. Trennklinge oder, in einem gesonderten Arbeitsgang, das Ausschneiden mit einem Laser. Der werkseitige Trennvorgang kann zu mindestens zwei verschiedenen Zeiten geschehen:
- Erstens kann eine Sperrklinge bereits während dem Hinterpress-Spritzgussverfahren verhindern, dass Kunststoffmaterial im zu trennenden Randbereich von beweglichen Elementen zusammenfliesst.
- Zweitens können - mittels einer Trennklinge - die beweglichen Elemente durch Stanzen bzw. Durchtrennen von dünneren Bereichen der zu trennenden Randbereiche vom tragenden Kunststoffbauteil getrennt werden.

Sollte nur in einer bestimmten Anzahl der Kunststoffbauteile bewegliche Elemente vorgesehen werden (z.B. zur Abdeckung von Einbaustellen von wahlweisem Zubehör in Verkehrsmitteln) kann auf ein werkseitiges Ausstanzen oder Trennen verzichtet werden. Ein Endverbraucher oder ein dafür vorgesehener Wartungsspezialist kann dann beispielsweise mit einem Handwerkzeug, einem Messer oder dergleichen, die vorgesehenen Ränder der beweglichen Elemente vom Kunststoffbauteil trennen. So bleiben beispielsweise Abdeckungen völlig geschlossen, wenn die erfindungsgemässen, beweglichen Elemente zwar vorgesehen, aber nicht genutzt werden. Dies hat z.B. in der Automobilindustrie den Vorteil, dass viele Varianten eines Fahrzeuges mit den gleichen Kunststoffbauteilen ausgerüstet werden können. Diese können sich zwar in Farbe und Struktur des verwendeten Decormaterials unterscheiden, sie weisen aber alle die vorbereiteten beweglichen Elemente auf. So kann jederzeit auf die zusätzlichen Ausbauwünsche der Kunden eingegangen werden, ohne dass ein grosser zusätzlicher Aufwand für die Bereitstellung von beweglichen Elementen in diesen - beispielsweise als Abdeckungen konzipierten - Kunststoffbauteilen notwendig wird.

Das vorstehend beschriebene Verfahren eignet sich grundsätzlich für alle Kunststoffe, die durch das Hinterpressverfahren bzw. durch Spritzgiessen verarbeitbar sind. Als Oberflächenschicht bzw. Decorschicht können solche Materialien verwendet werden, die bei dem Hinterpressvorgang eine feste Verbindung mit einem Kunststoff eingehen. Lediglich beispielhaft seien dazu textile Materialien, wie Gewirke und Kunststoffolien genannt. Es werden jedoch solche Kombinationen von Kunststoffen und Materialien der Oberflächenschicht bevorzugt, die sortenrein sind, so dass das kaschierte Kunststoffteil nach seinem bestimmungsgemässen Gebrauch mit geringem Aufwand zerkleinert und als Monomaterial wiederverwertet werden kann.

In bevorzugten Varianten des Verfahrens können Griffe oder Griffmulden vorgesehen werden, mit denen die beweglichen Elemente der Kunststoffbauteile, welche z.B. als Klappe oder Schieber geformt werden, sicher bewegt werden können.

Die Aufgabe wird ausserdem mit einem Werkzeug der eingangs beschriebenen Art erfindungsgemäss dadurch gelöst, dass das Werkzeug mit mindestens einem Sperrschieber versehen sein kann, der so in einer Sperrendlage anordenbar ist, dass die Kavität der geschlossenen Werkzeugform durch den Sperrschieber in mindestens zwei Kammern unterteilbar ist. Der Sperrschieber kann einen nahezu beliebigen Verlauf in der Werkzeugform haben, so dass auch ein kaschierter Abschnitt des zu bewegenden Elementes mit einer komplizierten Kontur herstellbar ist. Dabei weist der Sperrschieber eine relativ dünnwandige Sperr- bzw. Trennklinge auf, wodurch besonders präzise Bindenähte bzw. Stanzlinien erzielt werden können.

In bevorzugten Ausgestaltungen der Erfindung kann vorgesehen sein, dass der Sperrschieber pneumatisch, elektromagnetisch, mittels eines mechanischen Antriebs (z.B. Servoantrieb) oder insbesondere hydraulisch betätigbar ist. Diese Ausgestaltungen können mit einem relativ geringen konstruktiven Aufwand realisiert werden. Ausserdem sind derartige Antriebe an sich, als günstige und ausfallsichere Standardantriebe erhältlich.

Die Erfindung wird im folgenden anhand von in den Figuren schematisch dargestellten Ausführungsbeispielen näher erläutert; es zeigen:
- Fig. 1: eine Schnittdarstellung eines erfindungsgemässen Werkzeuges mit einer darin befindlichen Decorschicht und eingebrachter Kunststoffmasse vor dem kompletten Schliessen der Werkzeugform;
- Fig. 2a: eine Detailansicht des in Fig. 1 mit a gekennzeichneten Randbereichs zur Herstellung eines kaschierten, beweglichen Elementes - gemäss einer ersten Ausführungsform - welches an den kaschierten Teil eines Kunststoffbauteils stösst;
- Fig. 2b: eine Detailansicht des in Fig. 1 mit b gekennzeichneten Randbereichs zur Herstellung eines kaschierten, beweglichen Elementes - gemäss einer ersten Ausführungsform - , welches an den nichtkaschierten Teil eines Kunststoffbauteils stösst;
- Fig. 2c: eine Detailansicht entsprechend des in Fig. 2a mit a gekennzeichneten Randbereichs zur Herstellung eines kaschierten, beweglichen Elementes - gemäss einer zweiten Ausführungsform - welches an den kaschierten Teil eines Kunststoffbauteils stösst;
- Fig. 3: Detailansichten von bevorzugten Ausbildungsformen von Klappen und Filmscharnieren im Querschnitt:
a) Randbereich ohne Anschlag, mit V-förmiger Verengung des Kunststoffbauteils;
b) Randbereich mit Kunststoffanschlag und trogförmiger Verengung des Kunststoffbauteils;
c) Randbereich mit Decoranschlag und wannenförmiger Verengung des Kunststoffbauteils;
- Fig. 3d): Detailansicht einer bevorzugten Ausbildungsform von Schiebern im Querschnitt, Randbereich mit Kunststoffanschlag;
- Fig. 4a-c): Detailansichten von bevorzugten Ausbildungsformen von Griffen im Querschnitt;
- Fig. 4d-f): Detailansichten von bevorzugten Ausbildungsformen von Griffmulden im Querschnitt.

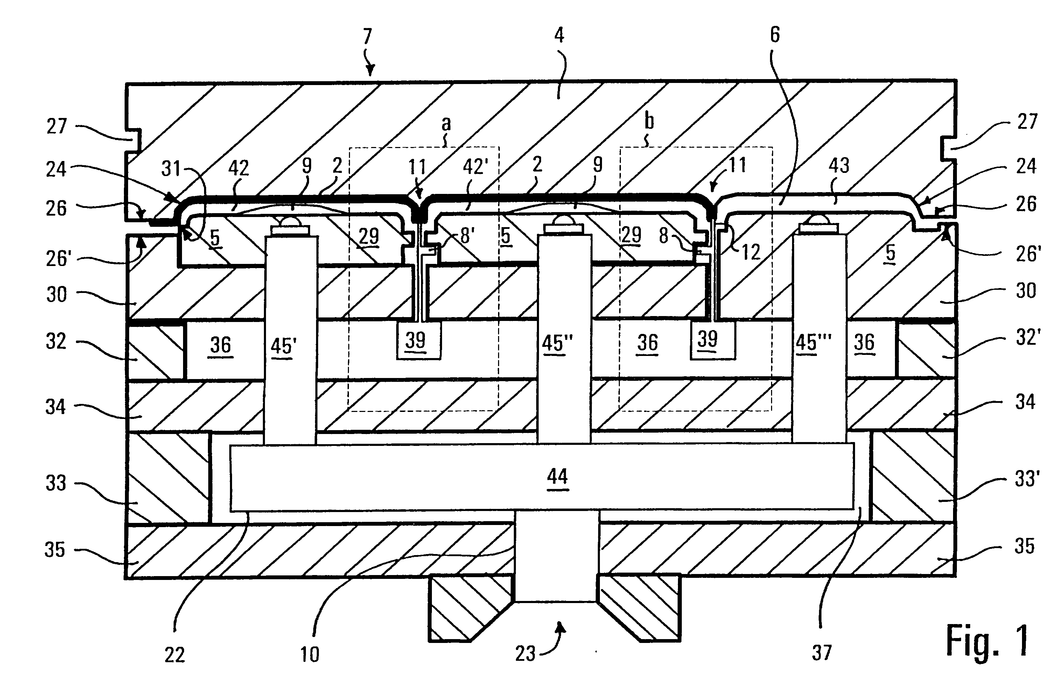

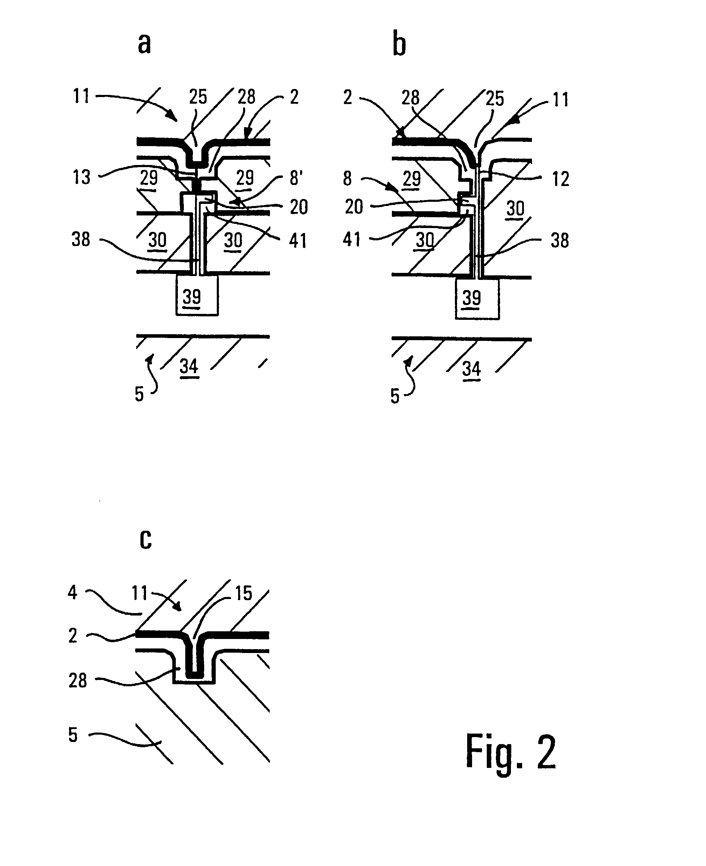

Das in den Fig. 1 und 2 a,b dargestellte Werkzeug 7 gemäss einer ersten Ausführungsform zum kombinierten Hinterpressen-Spritzgiessen ist Bestandteil einer sonst nicht weiter gezeigten Maschine zur Herstellung von Kunststoffteilen. Das als Vertikalschliesseinheit ausgebildete Werkzeug weist ein Werkzeugoberteil 4 auf, das einem Werkzeugunterteil 5 so gegenüberliegt, dass ihre Trennfuge im wesentlichen horizontal verläuft. Ausserdem ist das Werkzeug 7 mit mindestens einem Sperrschieber 8, einem Heizkanal 22, einer Angussbuchse 23 und einer nicht dargestellten Steuerung versehen.

Das Werkzeugoberteil 4 ist an dessen Unterseite so ausgebildet, dass es die negative Kontur eines damit herzustellenden, kaschierten Kunststoffbauteils aufweist. Die an dem Werkzeugoberteil 4 ausgebildete Kontur der Kavität 6 verläuft im wesentlichen horizontal. Lediglich an den Randbereichen 11 weist sie auf das Werkzeugunterteil 5 gerichtete vertikale Abschnitte auf, die auch als Tauchkanten 24 ausgebildet sein können. Des weiteren hat sie, in Bezug auf ihre horizontale Ausdehnung mindestens ein ebenfalls auf das Werkzeugunterteil 5 gerichtetes Trennelement 15 bzw. eine Nase 25. In Fig. 1, in den horizontalen Bereichen links und in der Mitte, ist das Werkzeugoberteil 4 mit einer nicht dargestellten Halteeinrichtung versehen. Es handelt sich dabei um mehrere Unterdruckdüsen, die gleichmässig zwischen den Nasen 25 und der Tauchkante 24 verteilt sind.

Die an dem Werkzeugoberteil 4 ausgebildete Kontur der Werkzeugform 7 ist an ihrem gesamten Umfang mit einer Auflagefläche 26 versehen. Ausserdem weist das Werkzeugoberteil 4 jeweils an seinen Stirnseiten Aufnahmenuten 27 auf, in die entsprechende Gegenstücke der (nicht dargestellten) Maschine eingreifen, um das Werkzeugoberteil in vertikaler Richtung zu halten.

An dem Werkzeugunterteil 5 ist an dessen Oberseite der untere Teil der Werkzeugform 7 ausgebildet, der ebenfalls entlang seines gesamten Umfangs von einer Auflagefläche 26' umgeben ist. Auch hier verläuft die, lediglich an ihren Randbereichen und in ihrer Mitte mit in etwa vertikalen Abschnitten versehene, Kontur der Werkzeugform 7 im wesentlichen horizontal. Dabei ist in horizontaler Richtung mindestens ein vertikaler Abschnitt der Kontur als Vertiefung 28 ausgebildet, die dem Trennelement 15 bzw. der Nase 25 des Werkzeugoberteils 4 gegenüber liegt.

Das Werkzeugunterteil 5 weist des weiteren einen Einsatz 29 auf, der in einer zu ihm korrespondierenden Ausnehmung eines Blocks 30 des Werkzeugunterteils 5 angeordnet ist. An der dem Werkzeugoberteil 4 gegenüberliegenden Fläche des Einsatzes 29 ist ein Abschnitt des unteren Teils der Kontur der Werkzeugform 7 ausgebildet. Dieser Abschnitt der Kontur ist gegenüber der Auflagefläche 26' erhaben und weist an seinem Rand eine relativ scharfe Kante 31 auf.

Durch jeweils paarweise angeordnete Abstandsleisten 32, 32' und 33, 33' wird zwischen dem Werkzeugunterteil 5 und einer ersten Platte 34 und der ersten Platte 34 und einer zweiten Platte 35 jeweils ein Zwischenraum 36, 37 freigegeben.

Wie ebenfalls den Fig. 1 und 2 a,b entnommen werden kann, ist im Bereich der Vertiefung 28 mindestens ein Sperrschieber 8, 8' angeordnet, der eine Sperr- 12 bzw. Trennklinge 13, eine Schubstange 38 und eine hydraulische Antriebseinheit 39 aufweist und mit der dieser Vertiefung 28 gegenüberliegenden Nase 25 zusammenwirkt. Die in dem Zwischenraum 36 an der Unterseite des Blocks 30 angeordnete hydraulische Antriebseinheit 39 ist mit einem an sich üblichen und deshalb nicht näher dargestellten Hydraulikzylinder, Hydraulikkolben, Ventil sowie mit Versorgungsleitungen und Steuerungsleitungen ausgestattet. Der Sperrschieber 8, 8' weist eine im wesentlichen vertikal verlaufende, dünne Sperrklinge 12 bzw. Trennklinge 13 und einen im Vergleich dazu breiteren Trägerteil 20 auf. Dabei sind in den Darstellungen der beiden Fig. 1 und 2 die in die Vertiefung hineinragenden Klingen 12, 13 in einem zwischen dem Einsatz 29 und dem Block 30 ausgebildeten Schlitz angeordnet, der auch als Führung für die vertikalen Bewegungen der Klingen 12, 13 dient. Die Anordnung der Klingen 12, 13 ist dabei so vorgenommen, dass sie gegen ein Eindringen von Kunststoff in den Schlitz dicht ist. Der Trägerteil 20 befindet sich zwischen einer durch den Einsatz 29 und dem Block 30 ausgebildeten Aufnahme 41, die für den Trägerteil 20 ebenfalls als Führung dient. Dabei wird durch Anschlag des Trägerteils 20 an einer oberen Begrenzungsfläche der Aufnahme 41 eine obere Endlage der Sperr- 12 bzw. Trennklinge 13 bestimmt. Die Klingen 12, 13 sind am oberen Ende der Schubstange 38 befestigt, die in einer durchgehenden Ausnehmung des Blocks 30 angeordnet ist. An ihrem unteren Ende ist die Schubstange 38 mit einem nicht dargestellten Hydraulikkolben versehen, der sich in der Antriebseinheit 39 befindet.

Das Werkzeugoberteil 4 bildet bei Auflage auf dem Werkzeugunterteil 5 mit diesem eine Kavität 6, die eine Kontur aufweist, die dem herzustellenden Kunststoffteil entspricht. Durch die Nasen 25 und die mit diesen zusammenwirkenden Klingen 12, 13 der Sperrschieber 8, 8' kann die Kavität 6 in mindestens zwei voneinander getrennte Kammern 42, 43 unterteilt werden. Die Trennelemente 15 bzw. die Nasen 25 und die Sperr- 12 bzw. Trennklinge 13 können dabei so angeordnet werden, dass sie gegeneinander anliegen und gemeinsam die Kammern 42, 43 gegen einen Übertritt von Kunststoffmasse in die jeweils andere Kammer abdichten. In dieser Position nehmen die Sperrschieber 8, 8' auch ihre Sperrendlage ein.

Wie des weiteren in Fig. 1 zu erkennen ist, befindet sich in dem zweiten Zwischenraum 37 ein sich im wesentliche horizontal erstreckendes Verteilerstück 44 des Heizkanals 22, in das eine Extrudierschnecke über eine Angussbuchse 23 plastifizierte Kunststoffmasse fördert. Ausgehend von dem Verteilerstück 44 münden mindestens zwei als vertikal ausgerichtete Nadelverschlussdüsen 45', 45'', 45''' ausgebildete Zuleitungen 10 so in die Kavität 6 der Werkzeugform 7, dass die Nasen 25 des Werkzeugoberteils 4 jeweils zwischen den Einmündungsstellen der Nadelverschlussdüsen 45', 45'', 45''' liegen. Der Heizkanal 22 ist mit einer nicht dargestellten steuerbaren Heizeinrichtung versehen, durch welche die plastifizierte Kunststoffmasse bzw. das Basismaterial 9 auf einer vorgegebenen Temperatur gehalten oder auch weiter erhitzt werden kann. Die Heizeinrichtung und die in der Schnittdarstellung der Figur 1 gezeigten Nadelverschlussdüsen 45', 45'', 45''' sind, ebenso wie weitere jedoch nicht dargestellte Nadelverschlussdüsen, an die Steuerung der Maschine angeschlossen. Mit dieser Steuerung können die Nadelverschlussdüsen unabhängig voneinander eine nach der anderen betätigt werden. Es handelt sich dabei in Bezug auf die Steuerung der Düsen um eine sogenannte Kaskadensteuerung.

Das in Fig. 2c dargestellte Werkzeug mit einem Werkzeugoberteil 4 und einem Werkzeugunterteil 5, gemäss einer zweiten Ausführungsform der vorliegenden Erfindung, ist ebenfalls Bestandteil einer sonst nicht weiter gezeigten Maschine mit einer nicht dargestellten Steuerung zur beispielsweisen Herstellung von Kunststoffteilen mittels Hinterpressen. Das hier dargestellte Werkzeug entspricht weitgehend dem Werkzeug der ersten Ausführungsform. Als wichtigste Unterschiede sind zu nennen:
- Die Trennelemente 15 sind hier als fixe Formklingen ausgebildet und mindestens in einem Teil der Randbereiche von mit den Kunststoffbauteilen einstückig herzustellenden, beweglichen Elementen angeordnet.
- Auf Sperrschieber wurde im wesentlichen verzichtet.
- Die Vertiefung 28 liegt gegenüber dem als fixe Formklinge ausgeführten Trennelement 15, welches vorzugsweise fast bis auf den Grund der Vertiefung 28 reicht.
- Durch die Trennelemente 15 und die mit diesen zusammenwirkenden Vertiefungen 28 kann die Kavität 6 in mindestens zwei Kammern 42, 43 unterteilt werden.
- Die Kunststoffmasse bzw. das Basismaterial 9 kann mit einer beweglichen Breitschlitzdüse (Strangablege-Verfahren) zwischen die Werkzeugteile 4 und 5 gebracht werden.
- Die Kunststoffmasse bzw. das Basismaterial 9 kann über Nadelverschlussdüsen (Quellfluss-Verfahren) zwischen die Werkzeugteile 4 und 5 gebracht werden.

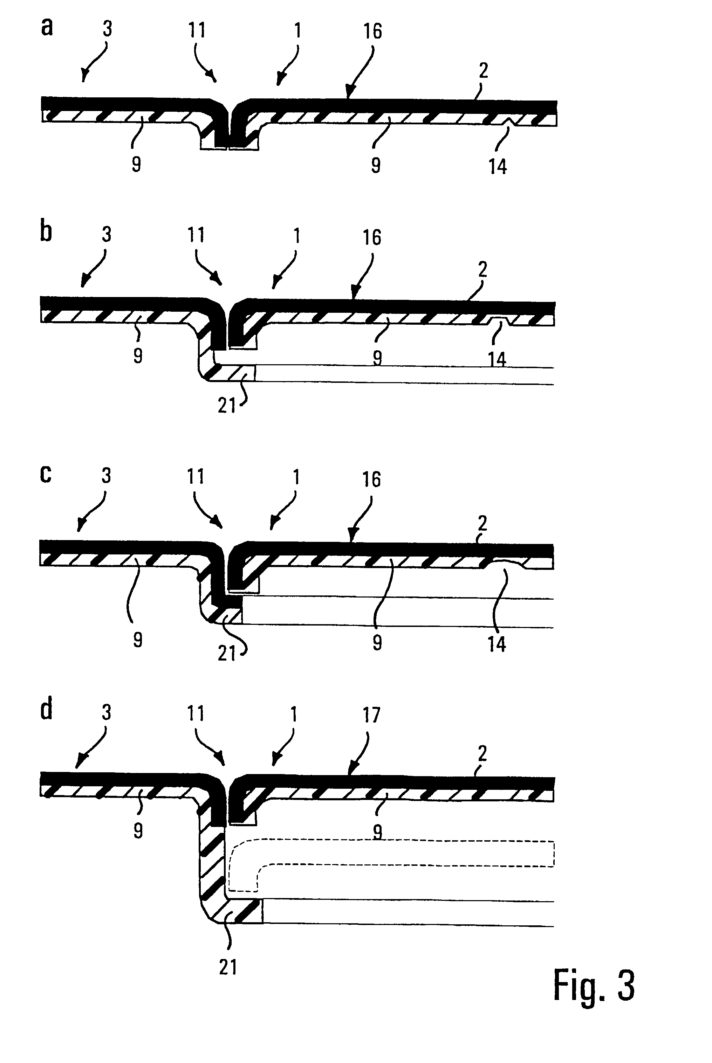

Das tragende Kunststoffbauteil 3 und die beweglichen Elemente 1 umfassen - wie aus Fig. 3 ersichtlich - je ein Basismaterial, das beispielsweise als massive Kunststoffschicht ausgebildet ist und eine Decorschicht 2. Zur Reduktion des Gewichtes kann das Basismaterial auch geschäumt sein. Zur Ausbildung von Filmscharnieren 14, über welche die einstückig hergestellten, beweglichen Elemente 1 mit dem tragenden Kunststoffbauteil 3 - beispielsweise im Falle der Ausbildung einer Klappe 16 - verbunden bleiben, kann das Basismaterial einen Bereich mit einer deutlich reduzierten Dicke bzw. einer Vertiefung oder Einengung aufweisen. Im Falle der Verwendung von geschäumtem Basismaterial kann die Struktur der Bereiche der Vertiefungen von der Struktur des restlichen Basismaterials abweichen - z.B. massiv sein - wodurch die Lebensdauer der Filmscharniere beeinflusst wird.

In Fig. 3 sind bevorzugte Ausführungsformen von Randbereichen 11 und Filmscharnieren 14 dargestellt. Dabei können die Randbereiche 11 eines beweglichen Elementes 1 so an das tragende Kunststoffbauteil 3 anstossen, dass wie in Fig. 3a) kein Anschlag, oder - in besonders bevorzugten Ausführungsformen - ein Anschlag 21 des Kunststoffbauteils 3 ohne (wie in Fig. 3b) oder mit Decorauflage 2 (wie in Fig. 3c) vorgesehen ist. Um die Beweglichkeit solcher Klappen 16 zu gewährleisten, sind diese - entlang eines Teils der vorbestimmten Randbereiche 11, welche mindestens einen Teil des Umrisses von beweglichen mit dem Kunststoffbauteil 3 einstückig hergestellten Elementen 1 definieren - mittels eines Filmscharniers 14 mit dem tragenden Kunststoffbauteil klappbar verbunden. Diese Filmscharniere 14 können als V-förmige, trog- oder wannenförmige Vertiefungen bzw. Einengungen des Basismaterials des Kunststoffbauteils 3 vorgesehen sein. Auch Kombinationen dieser Ausbildungsformen oder andere Vertiefungen, die dem Zweck der Erhöhung der Flexibilität bzw. der Dauerhaftigkeit dieser Filmscharniere dienen sind denkbar und Bestandteil des vorliegenden Erfindungsgedankens. Selbstverständlich können die Klappen gegen die Seite des Dekors 2 (wie in Fig. 3 abgebildet) oder entgegengesetzt dazu bewegt werden. Dabei kann entweder das bewegliche Element 1 oder das Kunststoffbauteil 3 einen oder mehrere Anschläge 21 tragen. Die Länge und Anzahl der Anschläge 21 pro bewegliches Element 1 richtet sich beispielsweise nach der Grösse bzw. dem Verwendungszweck oder der Belastung der beweglichen Elemente. Die Länge eines Anschlages kann wenige Zentimeter betragen. Ein Anschlag kann sich auch entlang grösserer Teile der Randbereiche 11 oder auch entlang dem ganzen Randbereich 11 eines beweglichen Elementes erstrecken.

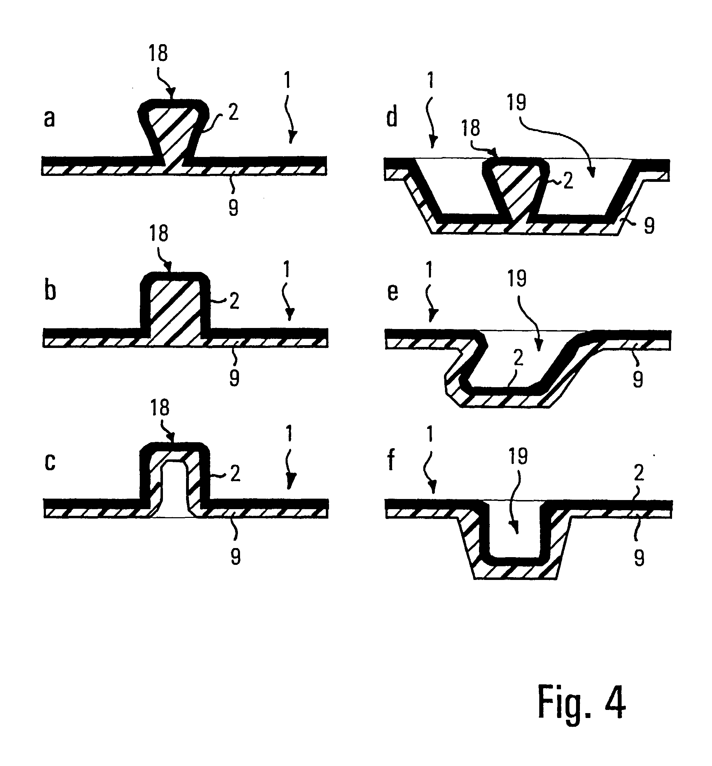

In Fig. 3d) ist eine bevorzugte Ausführungsform eines Schiebers 17 dargestellt. Ähnlich wie in Fig. 3b) ist ein Anschlag 21 ausgebildet, der steht jedoch weiter von der Oberfläche der Decorschicht 2 zurück. Nach erfolgtem Trennen - z.B. mittels eines Handwerkzeuges, eines Messers oder dergleichen - der Randbereiche 11 vom tragenden Kunststoffbauteil 3 kann der Schieber 17 von der Decorseite her eingedrückt und auf eine tiefer liegende Position (gestrichelt gezeichnet in Fig. 3c) bewegt werden. Auf dem tiefer liegenden Anschlag 21, der vorzugsweise auf mindestens einer geeigneten Seite über den Bereich des beweglichen Elements 1 hinaus verlängert ist, kann der Schieber - beispielsweise mit einem der in Fig. 4 dargestellten Handgriff - in die gewünschte Position bewegt oder wieder geschlossen werden. Dabei kann ein (nicht gezeichneter) Anschlag bzw. mehrere Anschläge die komplette Herausnahme des Schiebers verhindern. Der oder die Anschläge können am Kunststoffbauteil 3 oder am Schieber 17 oder an beiden vorgesehen sein.

Das bewegliche Element 1 kann auch als wegnehmbarer Deckel mit bzw. ohne Anschlag geformt sein, der werkseitig oder erst später vom tragenden Kunststoffbauteil getrennt wird. Solche Deckel können mit Zubehörteilen für Automobile, wie Skisäcken und dergleichen verbunden sein. Zur bequemen und sicheren Bewegung der Elemente 1, seien sie nun als Deckel, Kappe 16 oder Schieber 17 ausgebildet, können Griffe 18 bzw. Griffmulden 19 dienen, wie sie in Fig. 4a)-4c) bzw. Fig. 4d)-4f) dargestellt sind. Die Griffe 18 zeichnen sich dadurch aus, dass sie über die Decorschicht 2 herausragen können und vorzugsweise konisch verjüngt (Fig. 4a), gerade (Fig. 4b, c), bzw. gefüllt (Fig. 4a, b) oder hohl (Fig. 4c) gestaltet sind. Die Griffmulden 19 können einen oder mehrere dieser Griffe 18 in sich aufnehmen, wobei dann die Griffe 18 vorzugsweise nicht über die Griffmulde 19 herausstehen (Fig. 4d). Die Wand der Griffmulde 19 kann direkt als Griff (Fig. 4e), oder nur konisch (Fig. 4d) oder gerade (Fig. 4f) ausgebildet sein. Wichtig ist, dass diese Betätigungsmittel der beweglichen Elemente 1 einstückig mit diesen hergestellt sind. Dabei können diese Betätigungsmittel mit derselben Decorschicht 2 wie das bewegliche Element 1 und das Kunststoffbauteil 3 kaschiert sein oder es können unterschiedliche Farben oder Texturen für das Kunststoffbauteil, die beweglichen Elemente 1 bzw. die Betätigungsmittel oder beliebige Kombinationen vorgesehen werden.

Zur Herstellung eines kaschierten Kunststoffbauteils, gemäss einer ersten Ausführungsform, wird zuerst eine, aus Kunststoffmaterial bereits der gewünschten Kontur entsprechend vorgeformte, als Decorschicht 2 ausgebildete Oberflächenschicht in die, in der Darstellung von Fig. 1, linke und mittlere Kammer 42, 42' der Kavität 6 eingebracht, wobei die Unterdruckdüsen das Decormaterial 2 am Werkzeugoberteil 4 halten können. Die Grösse der Decorschicht 2 ist so bemessen, dass sie im Bereich der Tauchkante 24 mit Übermass überstehen kann, während sie vorzugsweise im Bereich der Trennelemente 15 bzw. der Sperrklinge 12 bereits die Sollgrösse aufweist. Anschliessend wird das Werkzeugoberteil 4 durch eine vertikale Bewegung auf das Werkzeugunterteil 5 zubewegt, bis die beiden Werkzeughälften, wie in Fig. 1 dargestellt, relativ nahe zueinander positioniert sind. Zuvor wurden bereits Sperrschieber 8, 8' in ihre obere Endlage gebracht, in der sie mit dem Trägerteil 20 an der oberen Begrenzungsfläche der Aufnahme 41 anliegen (siehe Fig. 2). Durch dieses Absenken des Werkzeugoberteils 4 kommen die Sperr- 12 bzw. Trennklingen 13 mit dem Rand der Decorschicht 2 in Kontakt. Da der vom Werkzeugoberteil 4 ausgeübte Druck grösser ist, als der Druck der Antriebseinheit 39 der Sperrschieber 8, 8', werden die Sperr- 12 bzw. Trennklinge 13 geringfügig zurückgeschoben. Danach werden die Nadelverschlussdüsen 45' und 45'' des Hinterpresswerkzeuges der Werkzeugform 7 solange geöffnet bis eine vorbestimmte Menge plastifizierter Kunststoffmaterialschmelze bzw. Basismaterial 9 in die linke und mittlere Kammer 42, 42' eingeflossen ist. Nachfolgend werden die ebenfalls in die Kammern 42, 42' mündenden (nicht dargestellten) weiteren Nadelverschlussdüsen, nacheinander geöffnet. In der Darstellung von Fig. 1 sind diese Verfahrensschritte bereits durchgeführt. Das Einbringen der Kunststoffmasse 9 geschieht mit einem relativ niedrigen Druck, so dass die Schmelze des Basismaterials 9 im Bereich der Nadelverschlussdüse 45', 45'' auf dem Werkzeugunterteil 5 liegen bleibt ohne bereits mit der Decorschicht 2 in Kontakt zu kommen.

Danach wird die Werkzeugform 7 durch eine weitere vertikale Bewegung des Werkzeugoberteils 4 komplett geschlossen. Dadurch drückt nun das Werkzeugoberteil 4 über die Decorschicht 2 auf die Kunststoffmasse 9, wodurch letztgenannte verdrängt wird und sich gleichmässig in den Kammern 42, 42' verteilt. Bereits während dieser Verdräng-Press-Bewegung schliesst die Tauchkante 24 des Werkzeugoberteils 4 zusammen mit der Kante 31 des Werkzeugunterteils 5 die Werkzeugform 7. Des weiteren wird bei der Schliessbewegung die Decorschicht 2 durch die Tauchkante 24 auf ihr Sollmass abgeschert. Die Abmessungen der Tauchkante 24 sind so auf die Kante 31 abgestimmt, dass die Werkzeugform 7 solange zur Entlüftung offen bleibt, bis sich durch das Verdrängpressen der Kunststoff bzw. das Basismaterial 9 im Bereich der Tauchkante 24 befindet, aber noch nicht ausgetreten ist.

Durch diese Schliessbewegung wird ausserdem die Sperr- 12 bzw. Trennklinge 13 und damit auch die Sperrschieber 8, 8' ein weiteres Stück in das Werkzeugunterteil 5 zurückgedrückt, so dass sie, nachdem die beiden Auflageflächen 26, 26' aufeinander liegen, schliesslich ihre Sperrendlage gegenüber der Trennelemente 15 bzw. Nasen 25 einnehmen.

Nachdem der Kunststoff in der linken und mittleren Kammer 42, 42' zu etwa 70% auskristallisiert ist, wird nun der Sperrschieber 8 komplett zurückgezogen und in die, in dieser Position ebenfalls geschlossene, rechte Kammer 43 durch deren Nadelverschlussdüse 45''' der gleiche Kunststoff 9 eingespritzt.

Nach dem Abwarten einer Stand- bzw. Kühlzeit zum Erreichen eines Kristallisationsvorganges können die Ränder der beweglichen Elemente 1 - durch einen Stanzvorgang mittels mindestens einer, durch einen Sperrschieber 8' bewegten, Trennklinge 13 - entlang mindestens eines Teils der vorbestimmten Randbereiche 11 der beweglichen Elemente 1 vom tragenden Kunststoffbauteil 3 getrennt werden. Darauf wird das Werkzeug 7 wieder geöffnet und das fertige Kunststoffbauteil 3 durch an dem Werkzeugunterteil 5 angeordnete, nicht dargestellte, Ausstosser ausgestossen.

In dieser Beschreibung einer beispielhaften Herstellung von beweglichen Elementen, die einstückig mit einem wahlweise kaschierten Kunststoffbauteil produziert werden, wurde-durch die Benennung der Kammern 42, 42' (mit Decorschicht 2) mit "linke" und "mittlere" Kammer bzw. der Kammer 43 (ohne Decorschicht 2) mit "rechte" Kammer - auf die geometrischen Gegebenheiten der Fig. 1 Rücksicht genommen. Dabei können die linke und mittlere Kammer 42, 42' - entsprechend der Einspritzfolge des Kunststoff- bzw. Basismaterials 9 - auch als "erste", die rechte Kammer 43 auch als "zweite" Kammer bezeichnet werden. Ebenso können im Werkzeug 7 die mit Werkzeugoberteil 4 bzw. Werkzeugunterteil 5 bezeichneten Werkzeugteile gegeneinander vertauscht sein, so dass das Werkzeugunterteil 5 das Decormaterial vor dem Hinterpress-bzw. Hinterspritzvorgang aufnimmt.

Es kann auch - gemäss einer zweiten bevorzugten Ausführungsform der Erfindung - vorgesehen sein, dass die beweglichen Elemente 1 einstückig mit den tragenden Kunststoffbauteilen 3 hergestellt werden, indem keine Nasen 25 und beweglichen Sperrschieber 8, sondern als Trennelemente 15 fixe Formklingen zur Ausbildung der Randbereiche 11 verwendet werden (vergl. Fig. 2c). In solchen Fällen können diese Trennelemente 15 bzw. Formklingen - entsprechend den Nasen 25 im obigen Beispiel - am Werkzeugoberteil 4 angeformt sein. Am Werkzeugunterteil 5 sind dann - den Formklingen gegenüberliegend - ebenfalls Vertiefungen 28 ausgebildet. Vorzugsweise können die Unterkanten dieser Trennelemente 15 bzw. Formklingen - im geschlossenen Zustand des Werkzeugs 7 - etwas vom Grund der Vertiefungen 28 beabstandet sein. So bleibt gerade Raum für die Ausbildung von dünnen Bereichen des Basismaterials 9, welches die beweglichen Elemente 1 in den Randbereichen 11 mit den tragenden Kunststoffbauteilen 3 verbinden. Das Basismaterial 9 kann hier auf einfache Weise mit den oben angeführten oder ähnlichen Werkzeugen durchtrennt werden. Des weiteren kann das Decormaterial vor dem Schliessen des Werkzeugs - anstatt dass es vorgeformt an einem Werkzeugteil angebracht wird - einfach zwischen die beiden Formhälften gelegt werden. Auch können an den tragenden Kunststoffbauteilen 3 Ansatzflächen für Verbindungselemente, wie Clips und dergleichen vorgesehen werden. Weitere Verbindungselemente oder Befestigungen für solche, wie Schweisszapfen, Klebeflächen und dergleichen gehören zum Umfang der vorliegenden Erfindung.

Ebenfalls bevorzugte Ausführungsformen der Kunststoffbauteile 3, die einstückig mit diesen hergestellte bewegliche Elemente 1 umfassen, können auf der Seite des Basismaterials 9 angeformte Behältnisse aufweisen, welche zur Aufbewahrung von Pannendreiecken, Sanitätskasten und dergleichen aufnehmen können. Ebenso angeformt sein können Verstrebungen, Verstärkungen oder ausschwenkbare Stützelemente. Weitere bevorzugte Ausführungsformen der vorliegenden Erfindung weisen diese Behältnisse, Verstrebungen, Verstärkungen bzw. Stützelemente an den beweglichen Elementen 1 selber auf. Beispielsweise können solche Stützelemente die Servicearbeiten an der Rückseite von Fahrzeugbeleuchtungseinrichtungen erheblich erleichtern, weil durch diese die beweglichen Abdeckungselemente 1 so offengehalten werden können, dass der Zugang zu den zu erreichenden Installationen während den Servicearbeiten frei bleibt.

Noch weitere Ausführungsformen der erfindungsgemässen beweglichen Elemente umfassen Dreh- oder Schnappverschlüsse zum Arretieren der beweglichen Elemente in einer bestimmten offenen oder mehr oder weniger geschlossenen Position. Das Vorsehen solcher Verschlusselemente erstreckt sich selbstverständlich auch auf die tragenden Kunststoffbauteile an denen bewegliche Elemente einstückig angeformt sind.

Als anwendbare Prozesse für die erfindungsgemässen mit tragenden Kunststoffbauteilen 3 einstückig hergestellten beweglichen Elemente 1 kommen vorzugsweise in Betracht: Hinterspritzen, Hinterpressen nach dem Strangablege- oder Quellflussverfahren oder beliebige Kombinationen dieser Prozesse.

Als Materialien kommen alle für ein kombiniertes Hinterpress-Spritzgussverfahren geeigneten Kunststoffe, also Thermoplaste wie z.B. Polypropylen, ABS-Copolymer (Acrylnitril-Butadien-Styrol-Copolymer) etc. oder Duroplaste wie Epoxidharze etc. in Frage. Diese Kunststoffe können auch beispielsweise mit Fasern oder Matten verstärkt sein. Auch sogenannte gefüllte Kunststoffe, denen beispielsweise Talkpartikel beigemischt wurden kommen in frage. Dabei werden oft auch verschiedenfarbige Decormaterialien und/oder Kunststoffe mit unterschiedlicher Textur verwendet.

Den in den Figuren dargestellten, erfindungsgemässen beweglichen Elementen 1 gemeinsam ist, egal ob es sich z.B. um Deckel, Klappen 16 oder Schieber 17 handelt, ein im Randbereich 11 von der Hauptfläche des beweglichen Elementes 1 weggebogener Rand, der so mit einer Decorschicht belegt sein kann, dass er mit dem ähnlich von der Hauptfläche des tragenden Kunststoffbauteils 3 weggebogenen Rand vorzugsweise und im wesentlichen parallel verläuft. Die beiden Ränder können dadurch mit ihren Oberflächen reibschlüssig aneinanderstossen und bilden an der mit der Decorschicht versehenen Oberfläche eine (beispielsweise in der Autoindustrie bekannte) sogenannte Schattenfuge. Dies birgt den Vorteil in sich, dass die beweglichen Elemente, auch wenn sie in den Randbereichen 11 vom tragenden Kunststoffbauteil 3 getrennt sind, keine Klappergeräusche verursachen und als im wesentlichen durchgehende Schallisolation wirken. Zudem werden, dank des Reibschlusses einer Klappe 16 mit dem Kunststoffbauteil 3, Schnappverschlüsse oder ähnliche Sperrvorrichtungen weitgehend überflüssig.

Vorzugsweise wird das Basismaterial, welches die beweglichen Elemente 1 in den Randbereichen 11 mit den tragenden Kunststoffbauteilen 3 verbinden, so dünn ausgebildet, dass es mit den angeführten oder ähnlichen Werkzeugen auf einfache Weise durchtrennt werden kann. In Abweichung von den in den Figuren 3a bis 3d dargestellten Ausführungsformen, können die Randbereiche 11 mindestens teilweise auch als gerader Stoss ausgebildet sein. In einer weiteren, abweichenden Ausführungsform kann auf die dünnen Bereiche, welche das Basismaterial 9 beispielsweise einer Klappe 16 mit dem tragenden Kunststoffbauteil 3 verbinden, verzichtet werden.

Als Anwendungsbeispiele sollen - stellvertretend und keinesfalls abschliessend - genannt werden:
- Ausstattungs- bzw. Verkleidungselemente in Verkehrsmitteln (z.B. in Autos, Bussen, Trams, Eisenbahnen, Schiffen oder Flugzeugen): Dabei können die erfindungsgemässen, beweglichen Elemente in Transportfahrzeugen vorgesehene Installationen, wie Zurrösen in Kombiwagen und Transportern, Sicherungen, Wassertanks und deren Einfüllöffnungen etc. oder Behältnisse für Zubehör, wie Werkzeug, Verbandkasten, Pannendreieck etc. abdecken.
- Verkleidungs bzw. Einrichtungsbauteile in Häusern (z.B. in Badezimmern, Möbeln, Läden, Ausstellungsausrüstungen): Dabei können die erfindungsgemässen, beweglichen Elemente Serviceöffnungen in Badewannenschürzen oder Duschentassen ebenso abdecken wie Sicherungs- oder Verteilerkästen von elektrischen Anlagen in Wohnungen oder Ausstellungseinrichtungen.
- Ausstattungs- bzw. Verkleidungselemente in Transportmitteln (z.B. in Koffern für Reisegepäck, Akten oder Instrumente): Dabei können die erfindungsgemässen, beweglichen Elemente Behältnisse in der Kofferschale oder in Zwischenwänden ebenso abdecken wie Adress- und andere Fächer.

## Patentansprüche

1. Verfahren zur Herstellung von beweglichen Elementen (1) eines insbesondere eine Decorschicht (2) aufweisenden Kunststoffbauteils (3), bei welchem zwei Werkzeughälften (4, 5) eine Kavität (6) einer Werkzeugform (7) bilden, die durch Trennelemente (15) in mindestens zwei Kammern (42, 43) unterteilt wird und welches die folgenden Schritte umfasst:
• Einlegen von Decormaterial (2) zwischen die beiden Werkzeughälften;
• Einbringen einer Kunststoffmaterialschmelze bzw. eines Basismaterials (9) in die Kavität (6) der Werkzeugform (7) und Schliessen der Werkzeugform;
• Verdrängpressen und gleichmässiges Verteilen der Kunststoffmaterialschmelze bzw. des Basismaterials (9) ;
• Abwarten des Kristallisationsvorganges und Ausstossen des Kunststoffbauteils (3);
**gekennzeichnet durch das**
Ausbilden von vorbestimmten Randbereichen (11) unter Zuhilfenahme der Trennelemente (15), die mindestens einen Teil des Umrisses von beweglichen Elementen (1) definieren, welche mit dem Kunststoffbauteil (3) einstückig hergestellt werden.

2. Verfahren nach Anspruch 1, **dadurch gekennzeichnet, dass** zum Trennen der Kavität (6) der Werkzeugform (7) in mindestens zwei Kammern (42, 43) Trennelemente (15) verwendet werden, welche als fixe Formklingen ausgebildet sind.

3. Verfahren nach Anspruch 1, **dadurch gekennzeichnet, dass** zum Trennen der Kavität (6) der Werkzeugform (7) in mindestens zwei Kammern (42, 43) Trennelemente (15) verwendet werden, welche als Nasen (25) ausgebildet sind und mit beweglichen Sperrschiebern (8, 8') zusammenwirken und dass ein kombiniertes Hinterpress-Spritzgussverfahren zur Anwendung gelangt, welches die folgenden Schritte umfasst:
• Anbringen von Decormaterial (2) an einer der Werkzeughälften, so dass es sich in einer ersten Kammer (42, 42') befindet, die durch Schliessen der Werkzeugform (7) und Überführen mindestens eines Sperrschiebers (8') in eine Sperrendlage in der Kavität (6) abgetrennt wird;
• Einbringen einer Kunststoffmaterialschmelze bzw. eines Basismaterials (9) in die Werkzeugform (7) durch mindestens eine Zuleitung (10), Schliessen der Werkzeugform (7) und Überführen mindestens eines Sperrschiebers (8, 8') in seine Sperrendlage;
• Verdrängpressen der Kunststoffmaterialschmelze bzw. des Basismaterials (9) und Abwarten eines vorbestimmten Kristallisationswertes;
• Zurückziehen des mindestens einen Sperrschiebers (8, 8') aus seiner Sperrendlage;
• Einspritzen einer zweiten Kunststoffmasse bzw. eines Basismaterials (9) in eine zweite Kammer (43) der Kavität (6), Abwarten des Kristallisationsvorganges und Ausstossen des Kunststoffbauteils (3);
• Ausbildung von vorbestimmten Randbereichen (11), die mindestens einen Teil des Umrisses von beweglichen Elementen (1) definieren, welche mit dem Kunststoffbauteil (3) einstückig hergestellt werden.

4. Verfahren nach einem der vorhergehenden Ansprüche, **dadurch gekennzeichnet**, dass die beweglichen Elemente (1) entlang mindestens eines Teils der vorbestimmten Randbereiche (11) durch eine Trennung vom Kunststoffbauteil (3) getrennt werden.

5. Verfahren nach Anspruch 3, **dadurch gekennzeichnet**, dass die Trennung mittels einer Sperrklinge (12) durchgeführt wird, welche verhindert, dass Kunststoffmaterial bzw. Basismaterial (9) in den zu trennenden Randbereichen (11) zusammenfliesst.

6. Verfahren nach einem der vorhergehenden Ansprüche, **dadurch gekennzeichnet**, dass dünnere Bereiche und/oder Vertiefungen im Kunststoff- bzw. Basismaterial (9) mindestens entlang je eines Teils der Randbereiche (11) des beweglichen Elements (3) ausgebildet werden.

7. Verfahren nach Anspruch 6, **dadurch gekennzeichnet, dass** die Trennung mittels einer Trennklinge (13) durchgeführt wird, so dass das Kunststoff- bzw. Basismaterial (9) in den dünneren Bereichen der zu trennenden Randbereiche (11) durchtrennt wird.

8. Verfahren nach Anspruch 5 oder 7, **dadurch gekennzeichnet,** dass die Sperr- (12) bzw. Trennklinge (13) mittels der Sperrschieber (8, 8') bewegt wird.

9. Verfahren nach Anspruch 4 oder 6, **dadurch gekennzeichnet**, dass die Trennung mittels eines Lasers durchgeführt wird.

10. Verfahren nach einem der Ansprüche 3 bis 9, **dadurch gekennzeichnet**, dass die Decorschicht (2) mit einer Halteeinrichtung an einer Werkzeughälfte (4) gehalten wird.

11. Werkzeug zur einstückigen Herstellung von insbesondere eine Decorschicht (2) aufweisenden beweglichen Elementen (1) eines Kunststoffbauteils (3), das ein Werkzeugober (4) und ein Werkzeugunterteil (5) umfasst, die eine Kavität (6) einer Werkzeugform (7) bilden; das Trennelemente (15) umfasst, durch welche die Kavität (6) in mindestens zwei Kammern (42, 43) unterteilbar ist und durch welche vorbestimmte Randbereiche (11) in mindestens einem Teil des Umrisses dieser beweglichen Elemente (1) definierbar sind, **daduch gekennzeichnet, dass** die Trennelemente (15) - zum Trennen der Kavität (6) der Werkzeugform (7) in mindestens zwei Kammern (42, 43) - als fixe Formklingen und/oder als Nasen (25), die gegenüber von Sperrschiebern (8, 8') angeordnet sind, ausgebildet sind.

12. Werkzeug nach Anspruch 11, **dadurch gekennzeichnet, dass** die Werkzeugform (7) für die Anwendung eines kombinierten Hinterpress-Spritzgussverfahrens ausgebildet ist und insbesondere eine Zuleitung (10) sowie eine Angussbuchse (23) für eine Kunststoffaufbereitungsanlage aufweist und dass die Werkzeugform (7) mit mindestens einem Sperrschieber (8, 8') versehen ist, der so in einer Sperrendlage anordenbar ist, dass die Kavität (6) der geschlossenen Werkzeugform (7) durch den Sperrschieber (8, 8') in mindestens zwei Kammern (42, 43) unterteilbar ist, und der zudem eine relativ dünnwandige Sperr- (12) bzw. Trennklinge (13) zum Trennen der Randbereiche (11) der mit dem Kunststoffbauteil (3) einstückig hergestellten, beweglichen Elemente (1) vom Kunststoffbauteil (3) umfasst und der in den vorbestimmten Randbereichen (11) mindestens eines Teils des Umrisses dieser beweglichen Elemente (1) anordenbar ist.

13. Werkzeug nach Anspruch 12, **dadurch gekennzeichnet, dass** der mindestens eine Sperrschieber (8, 8') hydraulisch, elektromagnetisch oder mechanisch betätigbar ist.

14. Werkzeug einem der vorhergehenden Ansprüche 11 bis 13, **dadurch gekennzeichnet, dass** die Werkzeugform (7) als Vertikalschliesseinheit ausgebildet ist und eine Tauchkante (24) aufweist.

15. Werkzeug nach Anspruch 14, **dadurch gekennzeichnet, dass** die Abmessungen der Tauchkante (24) so auf die Abmessungen der Werkzeugform (7) abstimmbar sind, dass die Werkzeugform (7) erst dann durch die Tauchkante (24) schliessbar ist, wenn durch den sich aufbauenden Schliessdruck, sich bereits Kunststoffmasse (9) im Bereich der Tauchkanten (24) befindet.

16. Werkzeug nach einem der Ansprüche 11 bis 15, **gekennzeichnet** durch Mittel zur Erzeugung eines Filmscharniers (14).

17. Bewegliches Element (1), welches einstückig mit einem Kunststoffbauteil (3) hergestellt ist und eine Oberfläche aufweist, die insbesondere teilweise mit einer Decorschicht (2) versehen ist und welches erzeugbar ist durch:
• Einlegen einer Decorschicht (2) zwischen zwei Werkzeughälften einer Werkzeugform (7), deren Kavität (6) mit mindestens einem Trennelement (15) in mehrere Kammern (42, 43) unterteilbar ist, wobei sich die Decorschicht (2) mindestens in einer der Kammern befindet;
• Einbringen einer Kunststoffmasse (9) in die Kavität (6) der Werkzeugform (7) und Schliessen der Werkzeugform (7), wodurch die erste Kunststoffmasse in den Kammern (42, 43) gleichmässig verteilt wird;
• Ausbildung von vorbestimmten Randbereichen (11) unter Zuhilfenahme der Trennelemente (15), die mindestens einen Teil des Umrisses von beweglichen Elementen (1) definieren, welche mit dem Kunststoffbauteil (3) einstückig hergestellt werden.

18. Bewegliches Element (1) eines Kunststoffbauteils (3) nach Anspruch 17, das in einem kombinierten Hinterpress-Spritzgussverfahren erzeugbar ist durch:
• Einlegen einer Decorschicht (2) in eine Werkzeughälfte einer Werkzeugform (7), deren Kavität (6) mit mindestens einem Sperrschieber (8, 8')in mehrere Kammern (42, 43) unterteilbar ist, wobei sich die Decorschicht (2) mindestens in einer der Kammern befindet;
• Einbringen einer ersten Kunststoffmasse (9) in eine erste Kammer (42, 42') und Schliessen der Werkzeugform (7), wodurch die erste Kunststoffmasse in der Kammer (42, 42') gleichmässig verteilt wird;
• Zurückziehen des mindestens einen Sperrschiebers (8') der Werkzeugform (7) und durch Einspritzen einer zweiten Kunststoffmasse (9) in eine zweite Kammer (43) der werkzeugform (7);
• Ausbildung von vorbestimmten Randbereichen (11), die mindestens einen Teil des Umrisses von beweglichen Elementen (1) definieren, welche mit dem Kunststoffbauteil (3) einstückig hergestellt werden.

19. Bewegliches Element (1) eines Kunststoffbauteils (3) nach Anspruch 17 oder 18, **dadurch gekennzeichnet, dass** das Element (1) entlang aller seiner vorbestimmten Randbereiche (11) vom tragenden Kunststoffbauteil (3) abtrennbar ist und einen Deckel oder einen Schieber (17) umfasst.

20. . Bewegliches Element (1) eines Kunststoffbauteils (3) nach Anspruch 17 oder 18, **dadurch gekennzeichnet, dass** das Element (1) eine Klappe (16) umfasst, welche entlang eines Teils der vorbestimmten Randbereiche (11) unter Ausbildung eines Filmscharniers (14) mit dem Kunststoffbauteil (3) klappbar verbunden ist.

21. Bewegliches Element (1) eines Kunststoffbauteils (3) nach einem der Ansprüche 17 bis 20, **dadurch gekennzeichnet**, dass das Element (1) einen Griff (18) bzw. eine Griffmulde (19) zum mindestens teilweisen Öffnen oder Schliessen umfasst.

## Claims

1. Method for producing moveable elements (1) of a plastic component (3), in particular one having a decorative layer (2), in which two mould halves (4, 5) form a cavity (6) of a mould (7) which is subdivided by separating elements (15) into at least two chambers (42, 43), and which comprises the following steps:
• inserting decorative material (2) between the two mould halves;
• introducing a polymer melt or a base material (9) into the cavity (6) of the mould (7), and closing the mould;
• displacement pressing and uniform distribution of the polymer melt or the base material (9);
• awaiting the crystallization process, and ejecting the plastic component (3);
characterized by
constructing predetermined edge regions (11) with the aid of the separating elements (15), which define at least a part of the contour of moveable elements (1) which are produced in one piece with the plastic component (3).

2. Method according to Claim 1, characterized in that separating elements (15) which are constructed as fixed mould blades are used to separate the cavity (6) of the mould (7) into at least two chambers (42, 43).

3. Method according to Claim 1, characterized in that separating elements (15) which are constructed as noses (25) and cooperate with moveable shut-off slides (8, 8') are used to separate the cavity (6) of the mould (7) into at least two chambers (42, 43), and in that a combined back compression moulding/injection moulding method comprising the following steps is applied:
• attaching decorative material (2) to one of the mould halves so that it is located in a first chamber (42, 42') which is cut off by closing the mould (7) and transferring at least one shut-off slide (8') into a shut-off limit position in the cavity (6);
• introducing a polymer melt or a base material (9) into the mould (7) through at least one feed line (10), closing the mould (7) and transferring at least one shut-off slide (8, 8') into its shut-off limit position;
• displacement pressing of the polymer melt or the base material (9) and awaiting a predetermined crystallization value;
• withdrawing the at least one shut-off slide (8, 8') from its shut-off limit position;
• injecting a second polymer melt or a base material (9) into a second chamber (43) of the cavity (6), awaiting the crystallization process and ejecting the plastic component (3); and
• constructing predetermined edge regions (11) which define at least a pact of the contour of moveable elements (1) which are produced in one piece with the plastic component (3).

4. Method according to one of the preceding claims, characterized in that the moveable elements (1) are separated along at least some of the predetermined edge regions (11) by a separation of the plastic component (3).

5. Method according to Claim 3, characterized in that the separation is carried out by means of a blocking blade (12) which prevents polymer material or base material (9) from flowing together in the edge regions (11) to be separated.

6. Method according to one of the preceding claims, characterized in that thinner regions and/or depressions in the polymer or base material (9) are constructed at least along in each case some of the edge regions (11) of the moveable element (1) .

7. Method according to Claim 6, characterized in that the separation is carried out by means of a separating blade (13) such that the polymer or base material (9) is severed in the thinner regions of the edge regions (11) to be separated.

8. Method according to Claim 5 or 7, characterized in that the blocking blade (12) or separating blade (13) is moved by means of the shut-off slide (8, 8').

9. Method according to Claim 4 or 6, characterized in that the separation is carried out by means of a laser.

10. Method according to one of Claims 3 to 9, characterized in that the decorative layer (2) is held on a mould half (4) by means of a holding device.

11. Moulding tool for producing in one piece moveable elements (1), in particular having a decorative layer (2), of a plastic component (3), which comprises a top mould half (4) and a bottom mould half (5) which form a cavity (6) of a mould (7) which comprises separating elements (15) by means of which the cavity can be subdivided into at least two chambers (42, 43), and by means of which predetermined edge regions (11) can be defined in at least a part of the contour of these moveable elements (1), characterized in that - for the purpose of separating the cavity (6) of the mould (7) into at least two chambers (42, 43) - the separating elements (15) are constructed as fixed mould blades and/or as noses (25) which are arranged opposite shut-off slides (8, 8').

12. Moulding tool according to Claim 11, characterized in that the mould (7) is constructed for applying a combined back compression moulding/injection moulding method and, in particular, has a feed line (10) and a sprue bush (23) for a plastics compounding line, and in that the mould (7) is provided with at least one shut-off slide (8, 8') which can be arranged in a shut-off limit position such that the cavity (6) of the closed mould (7) can be subdivided by the shut-off slide (8, 8') into at least two chambers (42, 43), and which, in addition, comprises a relatively thin-walled blocking blade (12) or separating blade (13) for separating the edge regions (11) of the moveable elements (1), produced in one piece with the plastic component (3), of the plastic component (3), and which can be arranged in the predetermined edge regions (11) of at least a part of the contour of these moveable elements (1).

13. Moulding tool according to Claim 12, characterized in that the at least one shut-off slide (8, 8') can be actuated hydraulically, electromagnetically or mechanically.

14. Moulding tool according to one of the preceding Claims 11 to 13, characterized in that the mould (7) is constructed as a vertical clamping unit and has a vertical flash face (24).

15. Moulding tool according to Claim 14, characterized in that the dimensions of the vertical flash face (24) can be matched to the dimensions of the mould (7) such that the mould (7) cannot be closed by the vertical flash face (24) until owing to the increasing clamping pressure polymer melt (9) is already located in the region of the vertical flash faces (24).

16. Moulding tool according to one of Claims 11 to 15, characterized by means for producing an integral hinge (14).

17. Moveable element (1) which is produced in one piece with a plastic component (3) and has a surface which is provided in particular partially with a decorative layer (2), and which can be produced by means of:
• inserting a decorative layer (2) between two mould halves of a mould (7) whose cavity (6) can be subdivided into a plurality of chambers (42, 43) with the aid of at least one separating element (15), the decorative layer (2) being located at least in one of the chambers;
• introducing a polymer melt (9) into the cavity (6) of the mould (7), and closing the mould (7), as a result of which the first polymer melt is uniformly distributed in the chambers (42, 43); and
• constructing predetermined edge regions (11) with the aid of the separating elements (15) which define at least a part of the contour of moveable elements (1) which are produced in one piece with the plastic component (3).

18. Moveable element (1) of a plastic component (3) according to Claim 17, which can be produced, using a combined back compression moulding/injection moulding method, by means of:
• inserting a decorative layer (2) into a mould half of a mould (7) whose cavity (6) can be subdivided into a plurality of chambers (42, 43) with the aid of at least one shut-off slide (8, 8'), the decorative layer (2) being located at least in one of the chambers;
• introducing a first polymer melt (9) into a first chamber (42, 42') and closing the mould (7), as a result of which the first polymer melt is uniformly distributed in the chamber (42, 42');
• withdrawing the at least one shut-off slide (8') of the mould (7), and injecting a second polymer melt (9) into a second chamber (43) of the mould (7); and
• constructing predetermined edge regions (11) which define at least a part of the contour of moveable elements (1) which are produced in one piece with the plastic component (3).

19. Moveable element (1) of a plastic component (3) according to Claim 17 or 18, characterized in that the element (1) can be cut off from the supporting plastic component (3) along all its predetermined edge regions (11), and comprises a cover or a slide (17).

20. Moveable element (1) of a plastic component (3) according to Claim 17 or 18, characterized in that the element (1) comprises a flap (16) which is connected in a hinged manner to the plastic component (3) with the formation of an integral hinge (14) along some of the predetermined edge regions (11).

21. Moveable element (1) of a plastic component (3) according to one of Claims 17 to 20, characterized in that the element (1) comprises a grip (18) or a gripping trough (19) for opening or closing at least partially.

## Revendications

1. Procédé pour la fabrication d'éléments mobiles (1) d'un composant en matière plastique (3) présentant en particulier une couche décorative (2), dans lequel deux moitiés de moules (4, 5) forment une cavité (6) d'un moule (7) qui est subdivisé par des éléments de séparation (15) en au moins deux chambres (42, 43), et qui comprend les étapes ci-après consistant à:
• insérer une matière décorative (2) entre les deux moitiés de moule;
• introduire une matière plastique en fusion, respectivement une matière de base (9) dans la cavité (6) du moule (7) et fermer le moule;
• comprimer par déplacement et répartir de manière uniforme la matière plastique en fusion, respectivement la matière de base (9);
• attendre le déroulement du processus de cristallisation et évacuer le composant (3) en matière plastique;
caractérisé par
la réalisation de zones marginales prédéfinies (11) à l'aide des éléments de séparation (15), ceux-ci définissant au moins une partie du contour des éléments mobiles (1), qui sont fabriqués en une seule pièce avec le composant (3) en matière plastique.

2. Procédé selon la revendication 1, caractérisé en ce qu'on utilise, pour la séparation de la cavité (6) du moule (7) en au moins deux chambres (42, 43), des éléments de séparation (15) qui sont réalisés sous la forme de lames de moule fixes.

3. Procédé selon la revendication 1, caractérisé en ce qu'on utilise, pour la séparation de la cavité (6) du moule (7) en au moins deux chambres (42, 43), des éléments de séparation (15) qui sont réalisés sous la forme de nez (25) et qui coopèrent avec des coulisseaux de verrouillage mobiles (8, 8') et en ce qu'on utilise un procédé combiné de moulage par compression du côté dorsal-par injection, qui comprend les étapes ci-après:
• application d'une matière décorative (2)contre une moitié de moule, si bien qu'elle se trouve dans une première chambre (42, 42') qui est séparée par fermeture du moule (7) et transfert d'au moins un coulisseau de verrouillage (8') dans une position terminale de verrouillage dans la cavité (6);
• introduction d'une matière plastique en fusion, respectivement d'une matière de base (9) dans le moule (7), via au moins un conduit (10), fermeture du moule (7) et transfert d'au moins un coulisseau de verrouillage (8, 8') dans sa position terminale de verrouillage;
• compression par déplacement de la matière plastique en fusion, respectivement de la matière de base (9) et attente d'une valeur de cristallisation prédéfinie;
• retrait du ou des coulisseaux de verrouillage (8, 8') de leur position terminale de verrouillage;
• injection d'une seconde matière plastique, respectivement d'une matière de base (9) dans une seconde chambre (43) de la cavité (6), attente du déroulement du processus de cristallisation et évacuation du composant (3) en matière plastique;
• réalisation de zones marginales prédéfinies (11), celles-ci définissant au moins une partie du contour d'éléments mobiles, qui sont fabriquées en une seule pièce avec le composant (3) en matière plastique.

4. Procédé selon l'une quelconque des revendications précédentes, caractérisé en ce qu'on sépare les éléments mobiles (1) le long d'au moins une partie des zones marginales prédéfinies (11) via une séparation par rapport au composant (3) en matière plastique.

5. Procédé selon la revendication 3, caractérisé en ce qu'on effectue la séparation à l'aide d'une lame de verrouillage (12) qui empêche la confluence de la matière plastique, respectivement de la matière de base (9) dans les zones marginales (11) à séparer.

6. Procédé selon l'une quelconque des revendications précédentes, caractérisé en ce qu'on réalise des zones plus minces et/ou des enfoncements dans la matière plastique, respectivement dans la matière de base (9), au moins le long de respectivement une partie des zones marginales (11) de l'élément mobile (3).

7. Procédé selon la revendication 6, caractérisé en ce qu'on effectue la séparation à l'aide d'une lame de séparation (13) de telle sorte que la matière plastique, respectivement la matière de base (9) est traversée dans les zones plus minces des zones marginales (11) à séparer.

8. Procédé selon l'un quelconque des revendications 5 ou 7, caractérisé en ce que la lame de verrouillage (12), respectivement la lame de séparation (13), se déplace sous l'action des coulisseaux de verrouillage (8, 8').

9. Procédé selon l'un quelconque des revendications 4 ou 6, caractérisé en ce qu'on effectue la séparation à l'aide d'un laser.

10. Procédé selon l'un quelconque des revendications 3 à 9, caractérisé en ce qu'on maintient la couche décorative (2) avec un mécanisme de maintien contre une moitié de moule (4).

11. Moule pour la fabrication en une seule pièce d'éléments mobiles (1) d'un composant en matière plastique (3), présentant en particulier une couche décorative (2), qui comprend un poinçon (4) et une matrice (5) qui forment une cavité (6) d'un moule (7) et qui comprend des éléments de séparation (15) par lesquels la cavité (6) peut être subdivisée en au moins deux chambres (42, 43) et par lesquelles des zones marginales prédéfinies (11) peuvent être définies dans au moins une partie du contour de ces éléments mobiles (1), caractérisé en ce que les éléments de séparation (15) - pour la séparation de la cavité (6) du moule (7) en au moins deux chambres (42, 43) - sont réalisés sous la forme de lames de moule fixes et/ou sous la forme de nez (25) qui sont disposés face à des coulisseaux de verrouillage (8, 8').

12. Moule selon la revendication 11, caractérisé en ce que le moule (7) est réalisé pour la mise en oeuvre d'un procédé combiné de moulage par compression du côté dorsal-par injection et présente en particulier un conduit (10) ainsi qu'une douille d'évacuation (23) pour une installation de préparation d'une matière plastique, et en ce que le moule (7) est muni d'au moins un coulisseau de verrouillage (8, 8') qui peut être disposé dans une position terminale de verrouillage de telle sorte que la cavité (6) du moule fermé (7) peut être subdivisée par le coulisseau de verrouillage (8, 8') en au moins deux chambres (42, 43) et qui comprend en outre une lame de verrouillage (12), respectivement de séparation (13) à paroi relativement mince pour la séparation des zones marginales des éléments mobiles (1) fabriqués en une seule pièce avec le composant (3) en matière plastique, par rapport au composant (3) en matière synthétique et qui peut être disposé dans les zones marginales prédéfinies (11) d'au moins une partie du contour de ces éléments mobiles (1).

13. Moule selon la revendication 12, caractérisé en ce que le ou les coulisseaux de verrouillage (8, 8') peuvent être actionnés par voie hydraulique, par voie électromagnétique ou par voie mécanique.

14. Moule selon l'une quelconque des revendications 11 à 13, caractérisé en ce que le moule (7) est réalisé sous la forme d'une unité à fermeture verticale et présente une arête d'immersion (24).

15. Moule selon la revendication 14, caractérisé en ce que les dimensions de l'arête d'immersion (24) peuvent être adaptées aux dimensions du moule (7) de telle sorte que le moule (7) ne peut être fermé par l'arête d'immersion (24) que lorsque la matière plastique (9) se trouve déjà dans la zone des arêtes d'immersion (24) sous l'effet de la pression de fermeture qui s'accumule.

16. Moule selon l'une quelconque des revendications 11 à 15, caractérisé par des moyens pour obtenir une charnière en forme de film (14).

17. Elément mobile (1) qui est fabriqué en une seule pièce avec un composant (3) en matière plastique et qui présente une surface qui est munie en particulier en partie d'une couche décorative (2), et qui peut être obtenu via les étapes ci-après:
• insertion d'une matière décorative (2) entre deux moitiés d'un moule (7) dont la cavité (6) peut être subdivisée à l'aide d'au moins un élément de séparation (15) en plusieurs chambres (42, 43), la couche décorative (2) se trouvant au moins dans une des chambres;
• introduction d'une matière plastique dans la cavité (6) du moule (7) et fermeture du moule (7), de telle sorte que la première matière plastique est répartie de manière uniforme dans les chambres (42, 43);
• réalisation de zones marginales prédéfinies (11) à l'aide des éléments de séparation (15), ceux-ci définissant au moins une partie du contour d'éléments mobiles (1), qui sont fabriqués en une seule pièce avec le composant (3) en matière plastique.

18. Elément mobile (1) d'un composant (3) en matière plastique selon la revendication 17, que l'on obtient dans un procédé combiné de moulage par compression du côté dorsale-par injection via les étapes ci-après:
• insertion d'une matière décorative (2) dans une moitié d'un moule (7) dont la cavité (6) peut être subdivisée avec au moins un coulisseau de verrouillage (8, 8') en plusieurs chambres (42, 43), la couche décorative (2) se trouvant au moins dans une des chambres;
• introduction d'une première matière plastique (9) dans une première chambre (42, 42') et fermeture du moule (7), si bien que la première matière plastique est répartie de manière uniforme dans la chambre (42, 42');
• retrait du ou des coulisseaux de verrouillage (8) du moule (7) et injection d'une seconde matière plastique (9) dans une second chambre (43) du moule (7);
• réalisation de zones marginales prédéfinies (11), celles-ci définissant au moins une partie du contour d'éléments mobiles (1), qui sont réalisées en une seule pièce avec le composant (3) en matière plastique.

19. Elément mobile (1) d'un composant (3) en matière plastique selon la revendication 17 ou 18, caractérisé en ce que l'élément (1) peut être séparé le long de toutes ses zones marginales prédéfinies (11) par rapport au composant de support (3) en matière synthétique et comprend un couvercle ou un coulisseau de verrouillage (17).

20. Elément mobile (1) d'un composant (3) en matière plastique selon la revendication 17 ou 18, caractérisé en ce que l'élément (1) comprend un clapet (16) qui est relié de manière pliable avec le composant (3) en matière plastique le long d'une partie des zones marginales prédéfinies (11), en formant une charnière (14) en forme de film.

21. Elément mobile (1) d'un composant (3) en matière plastique selon l'une quelconque des revendications 17 à 20, caractérisé en ce que l'élément (1) comprend une poignée (18), respectivement une cavité de saisie (19) à des fins d'ouverture ou de fermeture au moins partielle.
